# EUROPEAN PATENT APPLICATION

(11) **EP 1 093 746 A1**
(43) Date of publication of application: **25.04.2001**
(21) Application number: 99121103.8
(22) Date of filing: 22.10.1999
(51) Int. Cl.: A47J 31/46, A47J 31/04

(54) **Coffee maker valve for the production of frothed white coffee and the like and coffee maker provided with said valve**

(71) Applicant: ITALSERVICE di BALZANI Moreno, 38024 Gravellona Toce VB (IT)
(72) Inventor: Balzani, Moreno, 38024 Gravellona Toce VB (IT)
(74) Representative: Trupiano, Federica

(57) **Abstract**

A valve for coffee makers suitable to produce a frothed white coffee of the type made in bars, comprising a shutter (4) pressed with a fixed strength by means of a calibrated weight (6), so as to allow the coffee infusion to flow out in controlled conditions; a coffee maker provided with said valve.

## Description

The present invention relates to a delivery valve for coffee makers suitable to produce also at home a frothed white coffee, also called "cappuccino" or also coffee, in particular of the type obtained with the machines commonly used in bars. The invention also relates to the coffee maker provided with said delivery valve.

A coffee maker of the mocha type is known that, besides the boiler, the filter-reservoir for coffee powder and the coffee delivery chimney or column, comprises a vapor chimney in communication with the upper part of the boiler; the coffee production chimney and the vapor chimney end with two spouts that pour in one only cup: once some milk has been poured in the cup, the introduction of vapor through a spout and of coffee through the other spout allows to obtain a drink very similar to a bar white coffee.

Such coffee maker is bulky and rather complex.

Object of the present invention is to provide a valve for a coffee maker that allows the coming out and therefore the delivery of the coffee infusion in times and conditions controlled during the delivery in such a way as to cause the formation of froth in the white coffee and to render it similar to that produced with bar machines, which, as is known, requires the direct introduction of vapor.

Another object of the present invention is to provide a delivery valve that can be applied also to coffee makers for use at home and that allows to obtain a frothed white coffee (or simple coffee) of the type usually produced with the machines used in bars.

Still another object of the invention is to provide a coffee maker provided with said valve to produce a frothed white coffee or also simple coffee, which may be used at home, and such as to be easily employed, easily disassembled and cleaned and that complies with the utmost safety requirements.

These and still other objects and advantages which will be stressed by the following description are achieved by a valve to obtain frothed white milk (or also simple coffee), which valve comprises:
- a valve body;
- a chamber in said valve body;
- a feeding duct;
- a shutter sliding in said chamber;
- at least one delivery channel in communication with said chamber;
- at least one pressing means suitable to press said shutter in closing position of said duct.

More particularly, said pressure means is constituted by a calibrated weight applied onto said shutter.

Besides, said valve comprises at least a stopping means to stop said shutter in an opening position wherein it allows a fluid communication between said duct and said delivery channel, and also comprises a push-button to restore the closed position of the shutter.

Said valve body is preferably articulated into two half-bodies screwed with each other, wherein the lower half-body is provided with said delivery channel and a suitable threading about the lower opening.

Said stopping means comprises an opening or transversal seat at the top of the valve body and a sphere or small piston or the like pushed through a spring or the like against the stem which connects said calibrated weight with said shutter or against said shutter when the valve is in closing position or in a cavity obtained in said stem or in said shutter when the valve is in opening position.

In correspondence of said channels, delivery spouts, suitably downwards oriented, are also provided through which the infusion comes out.

The valve according to the invention comprises an internal chamber wherein a feeding duct and at least an outlet passage for the coffee infusion flow in, which is caused to communicate with the chamber when the shutter raises by effect of the pressure which generates below the shutter; the outlet passage may be only one, but there may be also two, three, four or more thereof, generally provided with a respective downwards oriented spout.

The coffee maker of the invention is provided with the aforesaid valve mounted on the ascending chimney of the coffee infusion, below the filter.

The coffee maker suitable to produce "cappuccino" or frothed white coffee of the bar type comprises a lower boiler, a filter element with a pipe extended for some length into the boiler, an upper collection container applicable on the lower boiler and provided with a chimney for the passage of the coffee infusion which emerges from said filter, which chimney has an engagement mouth whereon a valve is mounted according to claim 1.

More particularly, for the production of white milk, milk is poured in said upper collection container up to a level near the outlet hole of the delivery spout or spouts, so that said milk is swept across in controlled conditions by the hot and pressurized coffee infusion flowing out, realizing in this way the intimate mixing suitable to realize the physical and organoleptic characteristics typical of white coffee.

The valve and the coffee maker according to the invention allow therefore to obtain at home with minor difficulties a drink of the type of white coffee, without the need of directly introducing hot and pressurized steam into the mixture constituted by milk and coffee.

The invention will be described in the following, with reference to the attached drawings, wherein it is illustrated by way of non limiting example, and wherein:
Figure 1 shows schematically, in cross-section, a valve of the invention, according to an axial plane; the valve is shown in closed position;
Figure 2 is a view similar to the one of Figure 1, but showing the valve in open position;
Figure 3 shows schematically, in cross-section, a coffee maker according to the invention, provided with the valve of Figures 1 and 2.

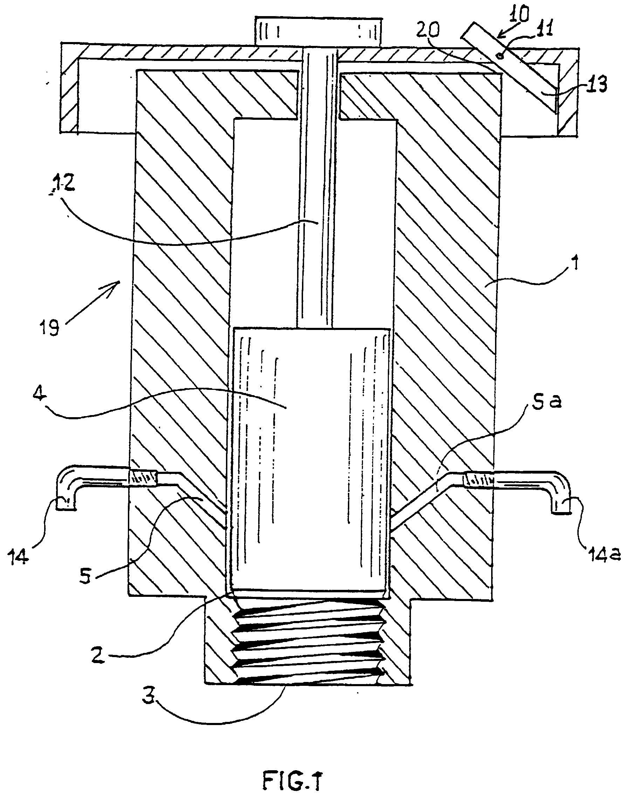

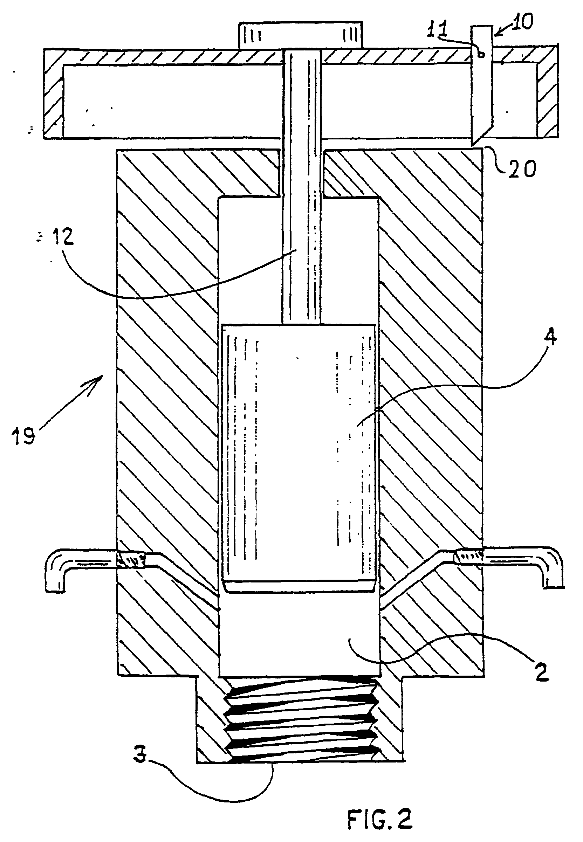

With reference to Figures 1 and 2, they show a valve indicated as a whole by 19, which comprises a valve body 1 made of two parts united to each other by screwing. An opening 3 opens into chamber 2 of the valve. The axial chamber 2 of the valve is in communication with the outlet channels 5 and 5a.

Although said outlet channels are represented in number of two in the figures, also one only channel or three or more channels may be present, angularly distributed at equal distances about the axis of the valve body. Each channel is provided with a downwards oriented sprout, 14 respectively 14a. A shutter 4 is slidingly housed in chamber 2 of the valve, tight against the side wall of the chamber.

An opening or transversal seat 10 is associated to said valve body 1, which seat houses a stopping means 11 generally spherical or piston-like shaped or the like, pushed towards stem 12 by an elastic means such as a spring 20 or the like. Stem 12 has a stopping recess or cavity 13 to house and lock said stopping means when shutter 4 is raised and the valve is in open position.

To close again the valve at the end of the operation, when the infusion has flown out, it suffices to exercise a pressure on the top of said calibrated means or weight 6 or on a special push-button 9 associated to the shutter.

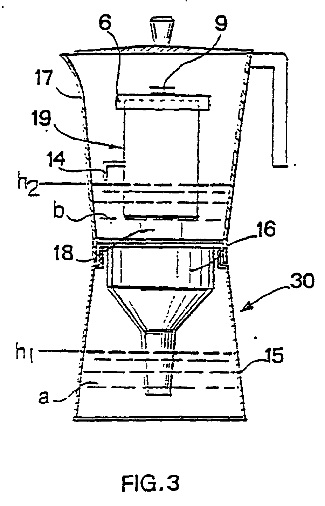

Figure 3 shows a coffee maker 30 comprising a lower boiler 15, a traditional filter element 16 and a reservoir 17 provided within a central truncated and threaded chimney 18, whereon valve 19 is screwed. Spout 14 protrudes into the collection reservoir 17. The coffee maker 30 is utilized by introducing water a in the boiler 15, for instance up to a level h1, and milk b in the upper reservoir 17 up to a level h2, near the outlet spout 14. The pressure caused in the boiler by the supply of heat presses water a through filter 16, but the so-formed coffee can flow into the upper collection reservoir only when it reaches such a pressure at to overcome the counter-pressure exercised by weight 6. At this moment, the pressure raises shutter 4. When the cavity or seat 13 present in stem 12 arrives in correspondence of the stopping means constituted by the sphere or piston 11 and spring 20 housed in seat 10, shutter 4 remains raised and locked in opening position, allowing therefore the coffee to flow out from spout 14 on the milk present in the upper reservoir 17. It has been observed that in this way conditions are realized that cause the obtained coffee and milk mixture to have all the physical and organoleptic characteristics of the white coffee obtained with the machines employed in bars. The drink so obtained in the pot is frothed and its taste is very similar to a white coffee obtained in the bar with the introduction of vapor in the milk. Upon conclusion of the delivery, key 9 permits to lower again the shutter.

Obviously, variations may be introduced in what has been described; for instance, spout 14 may be a single spout or be associated to another spout or a plurality of spouts.

## Claims

1. A valve to obtain frothed white coffee (or also simple coffee), which valve comprises:
- a valve body (1);
- a chamber (2) in said valve body;
- a feeding duct (3);
- a shutter (4) sliding in said chamber (2);
- at least one delivery channel (5, 5a) in communication with said chamber;
- at least one pressing means suitable to press said shutter in closing position of said duct (3).

2. The valve according to claim 1, characterized in that said pressing means is constituted by a calibrated weight (6) applied on said shutter (4).

3. The valve according to claim 1, characterized in that it further comprises at least a stopping means to stop said shutter (4) in an opening position wherein it allows a communication of fluid between said duct (3) and said delivery channel (5, 5a), and in that it further comprises a push-button (9) to restore the closing position of the shutter.

4. The valve according to claim 1, characterized in that said valve body is preferably made up by two half-bodies screwed with each other, the lower half-body having said delivery channel (5, 5a) and a suitable threading about the lower opening (3).

5. The valve according to claims 1 and 3, characterized in that said stopping means comprises an opening or transversal seat (10) at the top of the valve body (1) and a sphere or piston or the like (11) pushed by means of a spring or the like (20) against stem (12) that connects said calibrated weight (6) with said shutter (4) or against said shutter when the valve is in closing position or in a special cavity (13) obtained in said stem (12) or in said shutter, when said valve is in opening position.

6. The valve according to claim 1, characterized in that in correspondence of said channel (5, 5a) delivery spouts (14, 14a) are also provided.

7. A coffee maker suitable to produce frothed white coffee of the bar type, comprising a lower boiler (15), a filter element (16) with a pipe extended for some length into the boiler, an upper collection container (17) applicable on the lower boiler and provided with a chimney (18) for the passage of the coffee infusion which emerges from said filter, which chimney (18) has an engagement mouth whereon a valve (19) is mounted according to claim 1.

8. The coffee maker according to claim 7, characterized in that, for the production of white milk, milk is poured in said upper collection container (17) up to a level near to the outlet hole of the delivery spout or spouts, so that said milk is swept across in controlled conditions by the hot and pressurized coffee infusion flowing out, realizing in this way the intimate mixing suitable to realize the physical and organoleptic characteristics typical of white coffee or cappuccino.
